# EUROPÄISCHE PATENTSCHRIFT

(11) **EP 3 507 945 B1**
(45) Veröffentlichungstag und Bekanntmachung des Hinweises auf die Patenterteilung: **01.07.2020**
(21) Anmeldenummer: 16816686.6
(22) Anmeldetag: 20.12.2016
(51) Int. Cl.: H04L 12/413

(54) **IDENTIFIKATIONSVERFAHREN IN EINEM DETONATOR-NETZWERK**
IDENTIFICATION METHOD IN A DETONATOR NETWORK
PROCÉDÉ D'IDENTIFICATION DANS UN RÉSEAU DE DÉTONATEURS

(30) Priorität: 05.09.2016 DE 102016116567
(43) Veröffentlichungstag der Anmeldung: 10.07.2019
(73) Patentinhaber: Austin Star Detonator Company, Brownsville, TX 78520 (US)
(72) Erfinder: BERNER, Joachim, 71088 Holzgerlingen (DE); MARTINEZ REGIL, Salvador Eduardo, 70199 Stuttgart (DE)
(74) Vertreter: DREISS Patentanwälte PartG mbB
(86) Internationale Anmeldenummer: PCT/EP2016/081886
(87) Internationale Veröffentlichungsnummer: WO 2017/148556

(56) Entgegenhaltungen:
- WO-A1-2012/146631
- DE-A1-102011 080 476
- DE-A1-102011 089 587
- DE-A1-102012 200 997

## Beschreibung

Die Erfindung betrifft ein Verfahren zum Aufbau eines Netzwerks.

Bei zivilen Sprengungen, wie etwa im Tagebau oder Tunnelbau, sind die Präzision und die Genauigkeit der zeitlichen Abfolge von Einzelzündungen maßgeblich für die Wirtschaftlichkeit. Die Sprengungen können sich aus bis zu mehreren tausend Einzeldetonationen zusammensetzen. Elektronische Detonatoren bieten eine sehr hohe Genauigkeit und Präzision, erlauben einen Aufbau von Netzwerken mit mehreren hundert oder tausend Zündern. Programmierbare, elektronische Zünder verringern darüber hinaus die Lagerhaltungskosten, da für unterschiedliche Verzögerungszeiten keine unterschiedlichen Detonatoren benötigt werden, sondern jeder Detonator mit einer beliebigen Verzögerungszeit programmiert werden kann.

Elektronische Detonatoren benötigen einen Zeitgeber, der ihnen die notwendige Genauigkeit verleiht. Als Zeitgeber sind RC-Oszillatoren oder Schwingquarzoszillatoren bekannt. Die RC-Oszillatoren sind jedoch sehr ungenau und erfordern daher eine Kalibrierroutine, die unmittelbar vor der Sprengung durchgeführt werden muss. Schwingquarze bieten eine höhere Genauigkeit, können aber in der Regel trotzdem nicht auf die Kalibrierroutine verzichten. Schwingquarze weisen darüber hinaus eine nicht vernachlässigbare Temperaturabhängigkeit auf. Temperaturkompensierte Schwingquarzoszillatoren sind für diese Anwendung jedoch zu teuer und/oder verbrauchen sehr viel Energie und/oder benötigen zu viel Bauraum. Zudem sind Schwingquarze sehr schockempfindlich und daher grundsätzlich für Sprenganwendungen nicht optimal geeignet.

Ein weiteres wesentliches Problem in einem Netzwerk elektronischer Detonatoren ist die Identifizierung unbekannter Detonatoren. Denn nur wenn die einzelnen Detonatoren der Auslöse- bzw. Steuereinheit auch bekannt sind, kann mit diesen auch bidirektional kommuniziert werden.

Aus der DE 10 2011 089 587 A1 ist eine Teilnehmerstation eines Bussystems und ein Verfahren zur Übertragung von Nachrichten zwischen Teilnehmerstationen eines Bussystems bekannt. Die Teilnehmerstation umfasst eine Vergleichseinrichtung zum Vergleich einer Identifizierungskennung einer empfangenen Nachricht mit einer vorkonfigurierten Sendeidentifizierungskennung eines Sendespeichers der Teilnehmerstation.

### Beschreibung der Erfindung

Das der Erfindung zugrunde liegende Problem wird durch ein Verfahren zum Aufbau eines Netzwerks gemäß dem Anspruch 1 gelöst. Merkmale und Vorteile der Erfindung werden nachfolgend unter Bezugnahme auf die Figuren näher erläutert. Dabei können einzelne Merkmale der Ausführungsbeispiele auch in beliebiger Form miteinander kombiniert werden, selbst wenn dies nicht ausdrücklich in den Figuren gezeigt und in der Figurenbeschreibung beschrieben ist. Es zeigen:
- Figur 1: Aufbau des Detonators
a) Elektronik mit Plastikhülse;
b) Funkenstrecken-Überspannungsschutz auf Leiterplatte;
c) vergossene Elektronikeinheit;
d) assemblierter Detonator;
- Figur 2: Netzwerk einer Steuereinheit und mehrerer Detonatoren;
- Figur 3: Verbindung des Programmiergeräts mit einem Detonator;
- Figur 4: Assemblierter Detonator mit Kabel und Steckverbinder;
- Figur 5: Ablaufdiagramm der Programmierung;
- Figur 6: Schaltungstechnischer Aufbau der Buskommunikation;
- Figur 7: Kommunikation Master-zu-Detonator
- Figur 8: Autodetektion, die Übertragung der Bits der UID;
- Figuren 9a und 9b: Ablaufdiagramm einer Sprengung mit einer Steuereinheit und einem Netzwerk von Detonatoren;
- Figur 10: Datenkommunikation von Detonator zu Master; und
- Figur 11: Ablauf der Verschlüsselung von Befehlen in einem Detonatorsystem.

### Elektronischer Detonator, der nicht kalibriert werden muss

Die Erfindung betrifft einen elektronischen Detonator. Bei einem elektronischen Detonator wird die Zeitverzögerung zum Zünden der Sprengladung durch elektronische Zündverzögerung realisiert. Die Elektronik benötigt einen genauen Zeitgeber, um den gewollten Sprengzeitpunkt in der Sequenz mit hoher Genauigkeit treffen zu können.

Erfindungsgemäß wird vorgeschlagen, dass der Zeitgeber ein MEMS-Oszillator (Micro-electro-mechanical System) ist. Durch die Verwendung von MEMS-Oszillatoren ist eine Kalibrierung der Detonatoren vor der Sprengung nicht mehr notwendig. Vorzugsweise ist der MEMS-Oszillator temperaturkompensiert. Die Auswirkung von Temperaturabweichungen auf die Frequenz der Schwingung im Resonator kann vorteilhafterweise mittels eigener Temperatursensoren und elektronischer Schaltungsteile kompensiert werden. Auf diese Weise kann der Oszillator über den vorgesehenen Temperaturbereich frequenzstabil gehalten werden. Temperaturkompensierte MEMS-Oszillatoren besitzen eine größere Genauigkeit als nicht temperaturkompensierte Schwingquarzoszillatoren und sind dabei deutlich schockunempfindlicher. Der MEMS-Oszillator nutzt als frequenzbestimmendes Element einen MEMS-Resonator.

Vorzugsweise ist der MEMS-Oszillator ein Realtime Clock (RTC) Oszillator. Der RTC MEMS-Oszillator schwingt mit 32.768 Hz (oft auch verkürzt 32 kHz genannt). Der MEMS-Oszillator kann auf einer Leiterplatte einer elektronischen Einheit angeordnet werden. Es ist aber auch denkbar, den MEMS-Oszillator in einem Micro-Chip oder Mikrokontroller anzuordnen bzw. zu integrieren. Es ist auch denkbar, einen MEMS-Oszillator mit einem eingegossen MEMS-Resonator zu realisieren. Der MEMS-Resonator ist auf einen Hauptchip, welcher den Oszillator-ASIC (Application-Specific Integrated Circuit, anwendungsspezifische integrierte Schaltung) umfasst, oben drauf gesetzt, gebondet und mit vergossen. Prinzipiell kann der MEMS-Resonator zusammen mit anderen elektronischen Schaltungen und Bauteilen auf einem Halbleiter-Die hergestellt werden. Dadurch werden kleinere Abmessungen ermöglicht, als dies bei den im Anwendungsbereich vergleichbaren Quarzoszillatoren möglich ist. MEMS-Oszillatoren sind konstruktionsbedingt unter mechanischen Belastungen, insbesondere ausgelöst durch Schock oder Vibrationen, frequenzstabil.

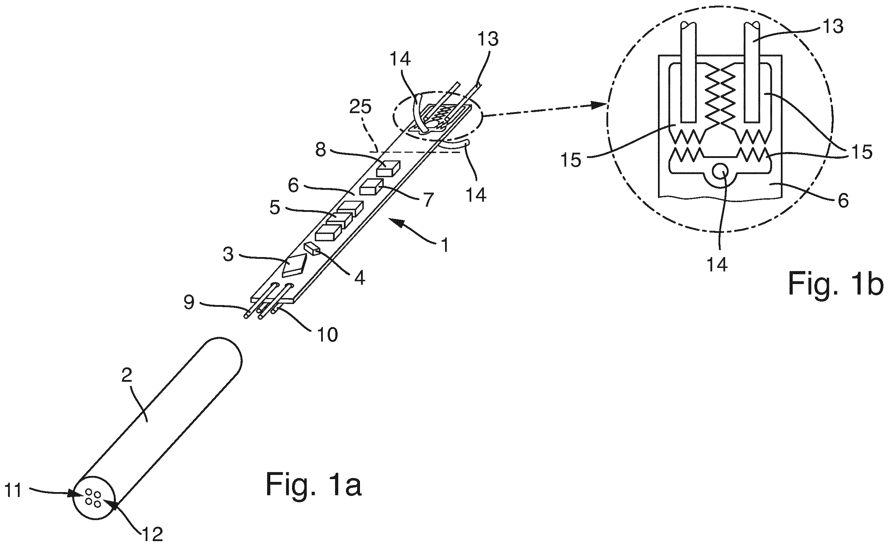

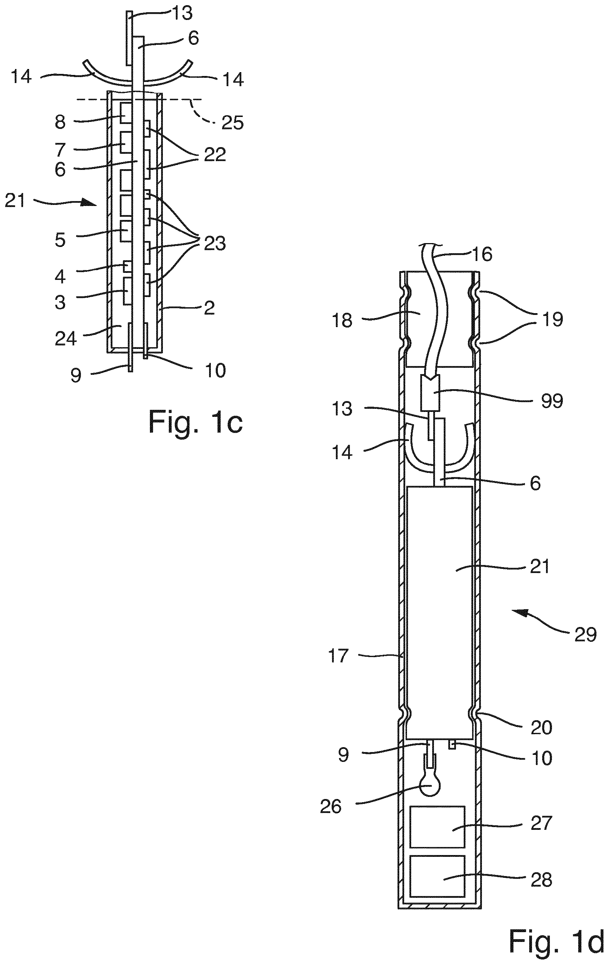

Die Figuren 1 zeigen den prinzipiellen Aufbau eines elektronischen Detonators 29. Die elektronische Einheit 1 eines Detonators 29 umfasst einen Mikrokontroller 3 (Logik, Kommunikation und digitaler Zeitverzögerer), einen MEMS-Oszillator 4 (präziser Zeitgeber), einen Logikkondensator 5 zum Speichern von elektrischer Energie zur autarken Stromversorgung des Mikrocontrollers 3 während der Zündsequenz, einen Zündkondensator 7 zum Speichern von elektrischer Energie zum Zünden, eine Suppressordiode (TSV Diode) 8, ein Kommunikationsmodul 22 sowie weitere elektronische Komponenten 23. Vorzugsweise sind die Bauteile 3, 4, 5, 7, 8, 22, 23 auf einer Leiterplatte 6 angeordnet. An einem Ende der Leiterplatte 6 sind Crimpkontakte 9 zum Verbinden mit einer Zündpille 26 und Testkontakte 10 angeordnet. Die Leiterplatte 6 wird in einem Vergussgehäuse 2 angeordnet. Das Vergussgehäuse 2 weist Durchgangslöcher 11, 12 für die Kontakte 9, 10 auf. Figur 1c) zeigt die in dem Vergussgehäuse 2 angeordnete elektronische Einheit 1, wobei das Vergussgehäuse 2 bis zu einer Vergussgrenze 25 mit einer Vergussmasse 24 aufgefüllt ist. Die Vergussmasse 24 schützt die elektronische Einheit 1 vor mechanischer Erschütterung. Gleichzeitig hat sie auch elektrisch isolierende Eigenschaften und verhindert das Eindringen von Feuchtigkeit.

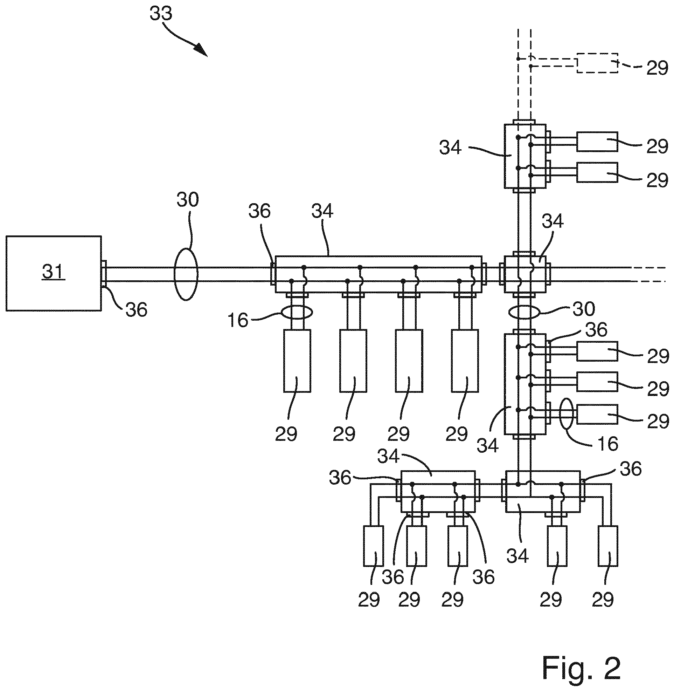

An einem freiliegenden Ende der vergossenen elektronischen Einheit 21 sind drei Pads 15 zum Schutz der elektronischen Einheit 1 vor elektrostatischer Entladung angeordnet (siehe Figur 1b). Zwischen den Pads 15 kann sich eine Funkenstrecke ausbilden. Speziell beim Herablassen der Detonatoren 29 in die Bohrlöcher können sehr starke elektrostatische Aufladungen entstehen. Die dreipolige Funkenstrecke 15 wird über die als Verbindungskontakt fungierenden Drähte 14 mit der Metallhülse 17 und über Kontakte 13 mittels einer Vercrimpung 99 mit einem zweiadrigen Zünderkabel 16 und weiter mit Busleitungen eines Bussystems 30 (vgl. Figur 2) verbunden. Die Zündkabel 16 sind mit einer Plastikumspritzung 18 versehen. Mit dem Bezugszeichen 19 ist eine ringförmige Vercrimpung der Metallhülse 17 auf der Kabelumspritzung 18 bezeichnet. Die Funkenstrecke bildet sich zwischen den drei Pads 15 aus, von welchen zwei mit dem Zünderkabel 16, genauer gesagt jeweils eines mit einer Leitung des Zünderkabels 16, verbunden sind. Die Pads 15 sind gezackt, und die Zacken stehen sich gegenüber. Überschreitet die Spannung zwischen den Pads 15 (also zwischen den Busleitungen) einen bestimmten Grenzwert (bspw. 100 bis 200 V), wird die Durchschlagsspannung der Luftbrücke zwischen den Spitzen der Zacken der Pads 15 überschritten, und es zündet ein Lichtbogen. Der elektrische Impuls entlädt sich also vor der nachfolgenden Elektronik 3, 4, 5, 7, 8, 22, 23 in der Einheit 21 und schützt diese. Die Pads 15 arbeiten quasi nach Art eines Blitzableiters. Der wesentliche Vorteil dieser Schutzvorrichtung ist, dass sie in die Leiterplatte 6 ohne zusätzliche Kosten integriert werden kann.

Das dritte Pad 15 ist mit einem Durchgangslötpunkt verbunden. In den Durchgangslötpunkt wird ein kurzes Stück Draht 14 eingelötet, das beiderseits der Platine 6 senkrecht von der Platine 6 absteht und den Kontakt zwischen dem Pad 15 (bzw. bei ausgebildeter Funkenstrecke zwischen allen drei Pads 15) und der Metallhülse 17 bildet. Wird die vergossene elektronische Einheit 21 in die Metallhülse 17 des Detonators 29 eingeschoben, kontaktiert der Draht 14 beidseitig die Innenwand der Metallhülse 17. Die Metallhülse 17 ist somit an den "dreipoligen Blitzableiter" angeschlossen. Dies ist sehr wichtig, da elektrostatische Entladung nicht nur zwischen den Buskabeladern 16 stattfinden kann, sondern auch von der Metallhülse 17 auf freiliegende, leitende Bereiche im Innern. Dies kann zu unerwünschten Zündungen führen und ist daher unbedingt zu vermeiden.

Figur 1d zeigt einen elektronischen Detonator 29. Dieser umfasst eine Metallhülse 17, eine in einem Vergussgehäuse 2 vergossene elektronische Einheit 21, die Zündpille 26, eine Primärsprengladung 27 und eine Sekundärsprengladung 28. Am Ende der Elektronik ist die Zündpille 26 angebracht. Die Zündpille 26 ist eine etwa streichholzkopfgroße Epoxidharzkapsel gefüllt mit einem pyrotechnischen Sprengstoff, in deren Mitte sich ein Wolframdraht befindet. Der Aufbau ist auch als U-Brücken-Zünder bekannt. Über die zwei Kontakte der Zündpille 26 kann man über die Drahtbrücke Strom (die Zündenergie) fließen lassen. Dabei kann der Stromfluss durch Schließen eines elektronischen Schalters (bspw. mittels des Zündsignals) ausgelöst werden. Ab einem gewissen Stromschwellwert erhitzt sich der Draht dabei so stark, dass er den pyrotechnischen Sprengstoff in der Epoxidharzkapsel zur Explosion bringt. Diese Explosion zündet die Primärladung 27 und diese wiederum die Sekundärladung 28. Der Detonator 29 platzt dann vorne aufgrund des hohen Drucks auf. Mithilfe dieses Drucks kann bspw. ein Plastiksprengstoff zur Detonation gebracht werden, der wiederum die erste Stufe einer Detonationsfolge ist. Über das Zünderkabel 16 kann der Detonator 29 zur Kommunikation und zur Spannungsversorgung über die Busleitungen des Bussystems 30 mit einer Steuereinheit 31 verbunden werden.

Die Erfindung betrifft ebenso ein Initialisierungssystem (oder Netzwerk), das eine Vielzahl von erfindungsgemäßen Detonatoren 29 und eine Steuereinheit 31 umfasst, mit welcher die Detonatoren 29 über Busleitungen des Bussystems 30 verbindbar sind. Figur 2 zeigt ein solches Detonatornetzwerk 33. Über die Zünderkabel 16 und die Busleitungen des Bussystems 30 sind eine Vielzahl von Detonatoren 29 mit der Steuereinheit 31 zu dem Detonatornetzwerk 33 verbunden. Die Busleitungen des Bussystems 30 sind zur Verbindung von Elementen vorgesehen und besitzen beidseitig Steckverbinder. Demgegenüber ist das Zünderkabel 16 nur auf einer Seite mit einem Steckverbinder ausgeführt und auf der anderen Seite starr mit dem Detonator 29 verbunden. Die Detonatoren 29 werden vorzugsweise direkt beim Verbinden mit der Steuereinheit 31 von dieser mit Spannung versorgt.

Die Steuereinheit 31 umfasst insbesondere folgende Komponenten: ein Benutzerinterface mit Anzeige- und Eingabevorrichtungen, eine Recheneinheit, ein Kommunikationsmodul.

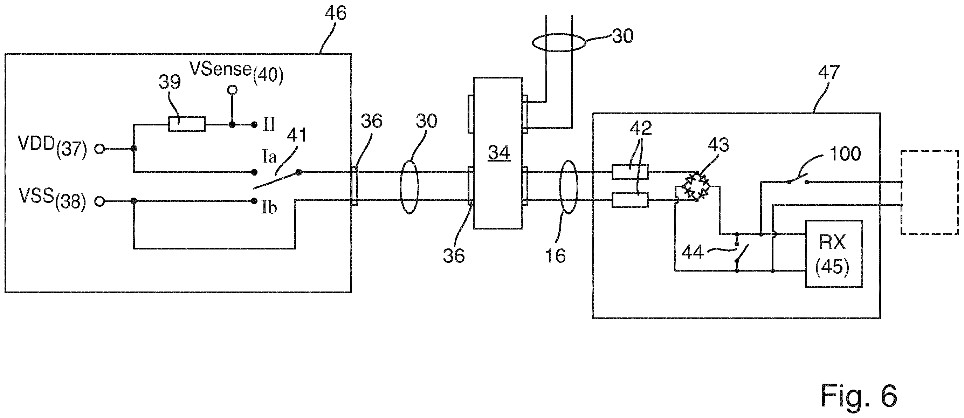

Über die Eingabevorrichtungen kann ein Benutzer Befehle, insbesondere einen Autodetektionsbefehl, einen Freigabebefehl und einen Auslösebefehl, eingeben. Diese Befehle werden von der Steuereinheit 31 verarbeitet und in entsprechende Signale (z.B. ein Zündsignal) umgewandelt und über die Busleitungen des Bussystems 30 an die Detonatoren 29 weitergeschickt. Ein Transceivermodul 46 ist Teil des Kommunikationsmoduls der Steuereinheit 31 und ist in Figur 6 dargestellt.

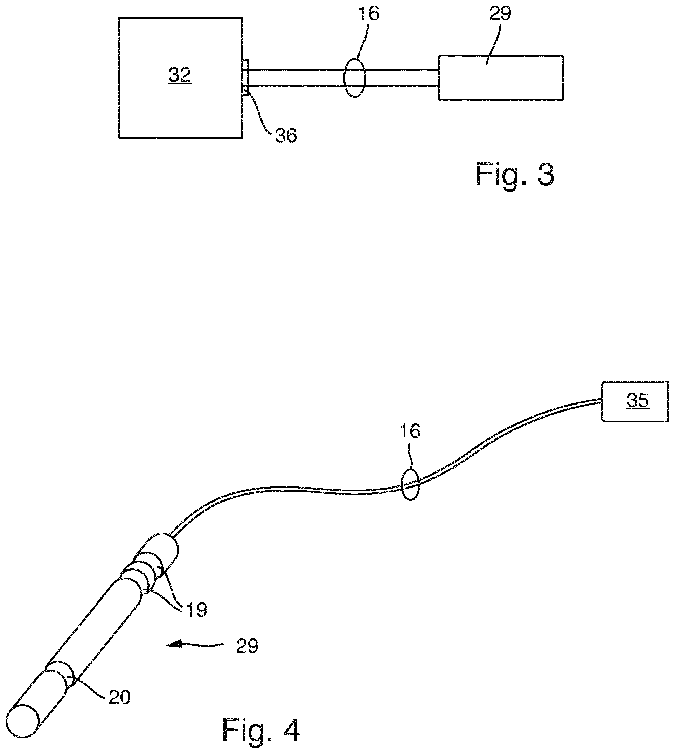

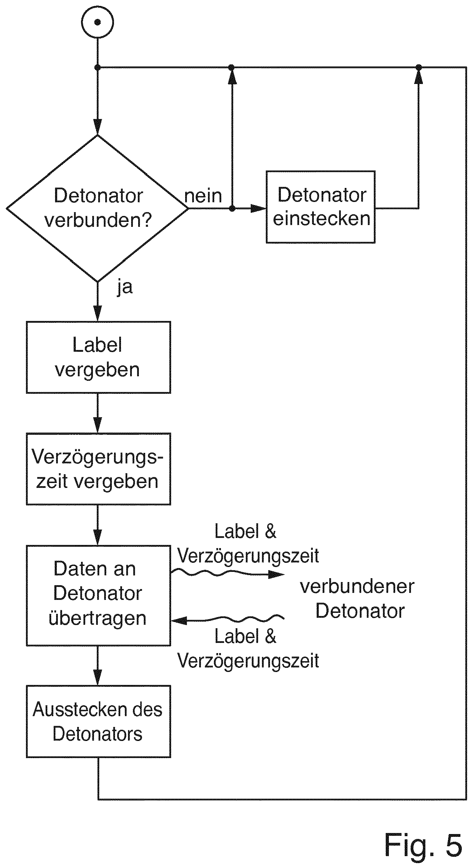

Figur 3 zeigt einen Detonator 29, der mit einer Programmiereinheit 32 verbunden ist. Über die Programmiereinheit 32 kann ein Benutzer beispielsweise die Zündverzögerungszeit programmieren, d.h. dem angeschlossen Detonator 29 kann eine individuelle Zündverzögerungszeit zugewiesen werden. Ferner kann über die Programmiereinheit 32 eine eindeutige Identifikation, bspw. in Form einer Feld-Identifikationsnummer (FID), vergeben werden. Ein Benutzer kann diese FID selbst auswählen, um einen besseren Überblick über die Zünder behalten zu können. Über die FID kann der Detonator 29 von dem Benutzer mit der Steuereinheit 31 im Netzwerk 33 aufgefunden werden. Die FID wird vorzugsweise nicht zur Identifizierung unbekannter Detonatoren 29 im Netzwerk 33 verwendet. Die FID ist eine digitale Beschriftung des Detonators 29 durch den Anwender, welche die Anwendbarkeit und Handhabung erleichtert. Figur 5 zeigt einen Ablauf der Programmierung eines Detonators 29 mit einer Programmiereinheit 32.

Figur 4 zeigt einen Detonator 29 mit herausgeführtem Zünderkabel 16, wobei an dem Zünderkabel 16 ein Steckverbinder 35 angeordnet ist. Der Steckverbinder 35 kann mit einer dazu kompatibel ausgebildeten Steckverbindung 36 eines Mehrfachsteckverbinders 34 verbunden werden (vgl. bspw. Figur 2).

### Verfahren zur Kommunikation in dem Detonatornetzwerk

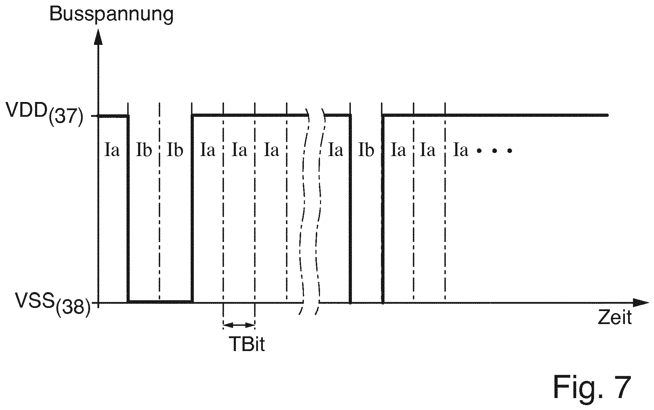

In einem Detonatornetzwerk 33 ist die Steuereinheit 31 mit den Detonatoren 29 vorzugsweise über Zweidrahtleitungen zu einem Bussystem 30 verbunden, wobei die Steuereinheit 31 vorzugsweise die übergeordnete Mastereinheit und die Detonatoren 29 vorzugsweise die untergeordneten Slaveeinheiten sind. Figur 6 zeigt eine Ausführungsform eines prinzipiellen Aufbaus der Schaltung für die Buskommunikation. Das Transceivermodul 46 ist Teil des Kommunikationsmoduls der Steuereinheit 31. Ein Sende- und Empfangsschalter 41 kann die Schalterstellungen Ia, Ib und II einnehmen. In der Schalterstellung Ia legt die Mastereinheit 31 den High-Pegel, also positive Busversorgungsspannung 37 (VDD), auf dem Bussystem 30 an. In der Schalterstellung Ib legt die Mastereinheit 31 den Low-Pegel, also negative Busversorgungsspannung 38 (Vss), auf dem Bussystem 30 an (vgl. Figur 7). Auf diese Weise kann die Mastereinheit 31 Befehle, wie zum Beispiel einen Autodetektionsbefehl, an die Slaveeinheiten 29 schicken. Ein Befehl besteht aus einer Folge von Low-Pegel/Bits (Schalterstellung Ia) und/oder High-Pegel/Bits (Schalterstellung Ib). Die Schalterstellung II wird im Folgenden erläutert.

Der Schalter 41 ist in der gezeigten Ausführungsform in Figur 6 als Dreiwegschalter dargestellt. Dies dient der Veranschaulichung der Funktionsweise. Andere technische Umsetzungen, die zu dieser Funktionalität führen, sind ebenfalls denkbar.

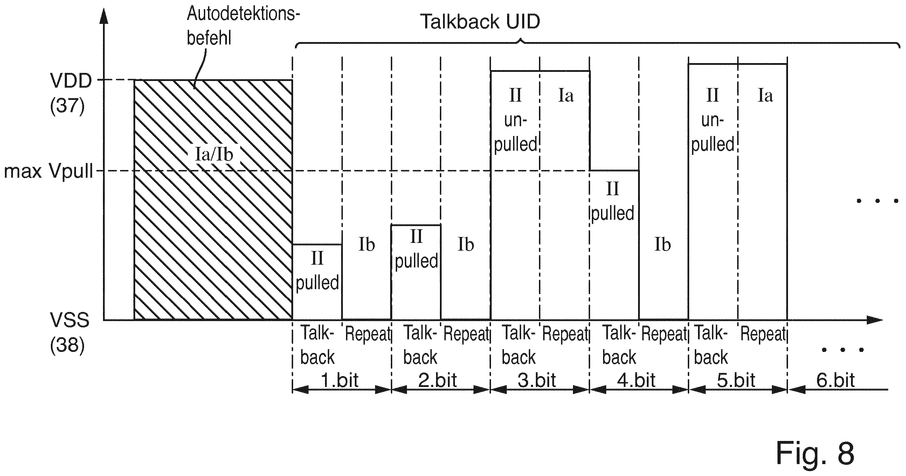

Damit die Mastereinheit 31 ein Talkback-Bit von den Detonatoren 29 empfangen kann, wird der Empfangs- und Sendeschalter 41 auf Schalterstellung II gesetzt. Über einen Anschluss 40 (Vsense) wird die an dem Bussystem 30 anliegende Spannung gemessen. Befindet sich der Schalter 41 in der Schalterstellung II, ist das Bussystem 30 über einen Rücksprechwiderstand 39 hochimpedant geschaltet. In diesem Zustand können die Detonatoren 29 auf dem Bussystem 30 sprechen, indem sie ein Bit (High- oder Low- Pegel) anlegen (vgl. Figur 8). Diese Phase wird auch als Talkbackphase oder Rücksprechphase bezeichnet.

In der Talkbackphase oder Rücksprechphase ist bei den Detonatoren 29 über einen integrierten Schalter 100 das Bussystem 30 von der Logik 3 und der zündtechnischen Schaltung 4, 5, 7, 8 getrennt, um den Stromfluss zu reduzieren (vgl. Figur 6). Während der kurzzeitigen Trennung von dem Bussystem 30, also zumindest für die Dauer eines Bits, versorgt sich die Logik 3 der Detonatoren 29 vorzugsweise aus den Logikkondensatoren 5. Somit wird der Versorgungsstrom für die Detonatoren 29, insbesondere für die Logik 3 der Detonatoren 29, während der Rücksprechphase, wenn die Logik 3 und die zündtechnischen Schaltung 4, 5, 7, 8 über den integrierten Schalter 100 von dem Bussystem 30 getrennt sind, aus den Logikkondensatoren 5 zur Verfügung gestellt und nicht mehr über das Bussystem 30. Wenn die Logik 3 und die zündtechnische Schaltung 4, 5, 7, 8 nicht vom Bussystem 30 getrennt sind, werden die Logikkondensatoren 5 der Detonatoren 29 des Netzwerks 33 über das Bussystem 30 geladen.

Ferner ist in Figur 6 eine Eingangsstufe 47 eines Kommunikationsmoduls 22 eines Detonators 29 dargestellt. Über einen Mehrfachsteckverbinder 34 ist es möglich, mehrere Detonatoren 29 über die Busleitungen mit dem Bussystem 30 zu verbinden. Jeder Detonator 29 wird dabei mit dem zweiadrigen Zünderkabel 16 über eine Steckverbindung 36 an einen Mehrfachsteckverbinder 34 angeschlossen. Die Zünderkabel 16 sind über Strombegrenzungswiderstände 42 und eine Gleichrichterdiodenbrücke 43 mit einer Empfangseinheit (Rx) 45 der Eingangsstufe 47 eines Detonators 29 verbunden. Ein Rücksprechschalter 44 wird für die Rücksprechphase geschlossen, um ein Low-Pegel/Bit an dem Bussystem 30 anzulegen. Um ein High-Pegel/Bit anzulegen, bleibt der Schalter 44 geöffnet.

Figur 8 zeigt den auf dem Bussystem 30 anliegenden Spannungslevel während dem Aussenden eines Autodetektionsbefehls und der Übertragung von Bits der eindeutigen Kennung (UID) der Detonatoren 29.

Befindet sich der Schalter 41 der Steuereinheit 31 in der Schalterstellung Ia, liegt der High-Pegel, also eine positive Busversorgungsspannung 37 (VDD), auf dem Bussystem 30 an. In der Schalterstellung Ib liegt der Low-Pegel, also eine negative Busversorgungsspannung 38 (Vss), auf dem Bussystem 30 an (vgl. Figur 7). Der Autodetektionsbefehl besteht bspw. aus einer Folge von Low-Pegel/Bits (Schalterstellung Ia) und/oder High-Pegel/Bits (Schalterstellung Ib) .

Befindet sich der Schalter 41 der Steuereinheit 31 in der Schalterstellung II, ist das Bussystem 30 hochimpedant geschaltet. Um ein Low-Pegel/Bit an dem Bussystem 30 anzulegen, wird der Rücksprechschalter 44 der Detonatoren 29 geschlossen. Auf diese Weise wird das Bussystem 30 heruntergezogen (Pull Down). Dies ist in der Figur 8 mit II_{pulled} bezeichnet. Um ein High-Pegel/Bit anzulegen, bleibt der Schalter 44 geöffnet. In Figur 8 ist dies mit II_{unpulled} bezeichnet.

Die Programmiereinheit 32 verfügt ebenfalls über eine Kommunikationseinheit mit einer Transceivereinheit 46. Jedoch ist diese im Ausgangsstrom aus schutztechnischen Gründen begrenzt und auch nur für die Kommunikation mit einzelnen Detonatoren 29 vorgesehen.

### Verfahren zum Identifizieren der Detonatoren in einem Netzwerk

Wenn einer oder mehrere Detonatoren 29 mit der Steuereinheit 31 zu einem Netzwerk 33 verbunden sind, müssen die mit der Steuereinheit 31 verbundenen Detonatoren 29 von dieser identifiziert werden, damit das Netzwerk 33 aufgebaut und bestimmungsgemäß betrieben werden kann. Die Steuereinheit 31 ist mit den Detonatoren 29 über Zweidrahtleitungen des Bussystems 30 zu dem Netzwerk 33 verbunden, wobei die Steuereinheit 31 vorzugsweise die übergeordnete Mastereinheit und die Detonatoren 29 vorzugsweise die untergeordneten Slaveeinheiten sind.

Die Steuereinheit 31 schickt einen globalen Autodetektionsbefehl über das Bussystem 30 an alle angeschlossenen Detonatoren 29. Durch den globalen Autodetektionsbefehl wird eine erste Schleife des Verfahrens zum Identifizieren der Detonatoren 29 ausgelöst. Der Autodetektionsbefehl besteht beispielsweise aus einer Folge von Low-Pegel/Bits und High-Pegel/Bits. Nach dem Empfang des Autodetektionsbefehls versuchen alle Detonatoren 29 dann gleichzeitig zu antworten. Dazu übertragen die Detonatoren 29 bitweise ihre einzigartige, bei der Herstellung zugewiesene Identifikationsnummer (eindeutige Kennung, unique identifier - UID). Die Mastereinheit 31 erlaubt den Detonatoren 29, das Bussystem 30 für die Dauer eines Bits herunterzuziehen (Pull Down). Nach dem Verbinden der Detonatoren 29 mit der Steuereinheit 31 sind zunächst alle Detonatoren 29 nicht bekannt und somit nicht identifiziert. Alle unbekannten Detonatoren 29 legen ihr erstes Identifier-Bit (Low-Pegel/Bit oder High-Pegel/Bit) für eine Bitdauer an dem Bussystem 30 an. Durch das Anlegen der ersten Identifier-Bits durch die Detonatoren 29 wird eine zweite Schleife des Verfahrens ausgelöst. Innerhalb jeder Iteration der ersten Schleife wird die zweite Schleife mindestens einmal, vorzugsweise mehrmals, iterativ durchlaufen.

Hat die Mastereinheit 31 das erste Bit empfangen, wiederholt sie dieses. Die Detonatoren 29 empfangen nun das von der Mastereinheit 31 wiederholte Bit und somit das, was auf dem Bussystem 30 wirklich gesprochen wurde. Die Detonatoren 29 vergleichen nun, ob das von ihnen angelegte Bit mit dem wiederholten Bit übereinstimmt, indem jeder Detonator 29 prüft, ob der von ihm angelegte Pegel (High oder Low) auch tatsächlich auf dem Bussystem 30 anliegt. Hierbei ist der High-Pegel rezessiv und der Low-Pegel dominant. Legt ein Detonator 29 einen Low-Pegel an, ist das Bussystem 30 auf Low, unabhängig davon, ob andere Detonatoren 29 High-Pegel anlegen. Die Detonatoren 29, die High-Pegel anlegt haben, sehen, wenn von der Mastereinheit 31 der Low-Pegel angelegt wird, dass der von ihnen angelegte Pegel nicht auf dem Bussystem 30 anliegt. Daraufhin hört der Detonator 29 auf mit der Übertragung seiner UID und versucht, erst bei dem nächsten Autodetektionsbefehl wieder sich beim Master 31 zu identifizieren. Hat das empfangene Bit mit dem gesendeten Bit übereingestimmt, überträgt der Detonator 29 das nächste Bit seiner UID. Die zweite Schleife wird erneut durchlaufen.

Die Mastereinheit 31 empfängt dieses Bit und wiederholt es. Daraufhin wird die zweite Schleife erneut durchlaufen. Die Detonatoren 29 empfangen das wiederholte Bit und vergleichen wieder das von ihnen gesendete Bit mit der Wiederholung des Bits durch den Busmaster 31. Nach jeder Iteration der zweiten Schleife ist also ein weiteres Bit der eindeutigen Kennung (UID) eines Detonators 29 bekannt.

Dies geht solange, bis sich schließlich einer der Detonatoren 29 durchgesetzt hat, d.h. wenn einer der Detonatoren 29 alle Bits seiner eindeutigen Kennung (UID) übertragen hat. Die Iteration der ersten Schleife ist also beendet, wenn so viele weitere Bits ausgesandt wurden, wie die eindeutigen Kennungen (UID) der Detonatoren 29 Bits hat. Der Master 31 kennt nun die UID dieses Detonators 29 und der Detonator 29 ist im Netzwerk 33 identifiziert.

Ist ein Detonator 29 einmal identifiziert, enthält er sich beim nachfolgenden Autodetektionsbefehlen, d.h. er sendet seine eindeutige Kennung (UID) nicht mehr über das Bussystem 30. Das Aussenden von Autodetektionsbefehlen durch die Mastereinheit 31, wodurch ein Durchlauf durch die erste Schleife ausgelöst wird, wird solange wiederholt, bis kein Detonator 29 mehr antwortet, wenn also alle Detonatoren 29 im Netzwerk 33 registriert sind. Die erste Schleife wird also entsprechend der Anzahl der zu Beginn des Verfahrens in dem Netzwerk 33 nicht identifizierten Detonatoren 29 iterativ durchlaufen, wobei nach jedem Durchlauf der ersten Schleife ein weiterer Detonator 29 identifiziert ist.

Das Verfahren wird beendet, wenn die Anzahl der identifizierten Detonatoren 29 der Anzahl der zu Beginn des Verfahrens nicht identifizierten Detonatoren 29 in dem Netzwerk 33 entspricht und/oder wenn keiner der Detonatoren 29 des Netzwerks 33 auf einen Autodetektionsbefehl mehr antwortet. Hierbei wird davon ausgegangen, dass ein Detonator 29 nicht mehr antwortet, wenn er innerhalb eines vorgegeben Zeitfensters nicht antwortet.

Zugriffsprobleme auf dem Bussystem 30 werden durch die bitweise Arbitrierung der UID gelöst, die von jeder Slaveeinheit 29 durch die Überwachung des Bus-Levels Bit für Bit vorgenommen wird. Der dominante Pegel ist der Low-Pegel (logisch 0), der vorzugsweise dem niedrigeren Spannungspegel auf dem Bussystem 30 zugeordnet ist, der rezessive Pegel ist der High-Pegel (logisch 1). Alle Slaveeinheiten 29, die ein rezessives Bit anlegen, aber ein dominantes Bit empfangen, deren zuvor ausgesandtes Bit ihrer eindeutigen Kennung (UID) mit dem empfangenen Wiederholungsbit also nicht übereinstimmt, hören für die Dauer des laufenden Durchlaufs der ersten Schleife mit der bitweisen Übertragung ihrer eindeutigen Kennung (UID) auf und sind ab sofort nur noch Empfänger und haben keinen Schreibzugriff auf das Bussystem 30 mehr. Die Slaveeinheiten 29 empfangen das durch die Mastereinheit 31 wiederholte Bit, also die höher priorisierte Nachricht, und versuchen, nicht mehr zu senden, bis das Bussystem 30 wieder frei ist, und ein weiterer Autodetektionsbefehl von der Mastereinheit 31 auf das Bussystem 30 geschickt wird. Diese Slaveeinheiten 29 nehmen erst beim nächsten Durchlauf der ersten Schleife nach einem nochmaligen Empfang eines Autodetektionsbefehls der Steuereinheit 31 wieder die bitweise Übertragung ihrer eindeutigen Kennung (UID) auf.

Auf diese Weise setzt sich immer der Detonator 29 mit der UID mit der höchsten Priorität durch. Da die UIDs einzigartig und unverwechselbar sind, ergibt sich keine Kollision bei der Identifizierung der Detonatoren 29 mit der Steuereinheit 31.

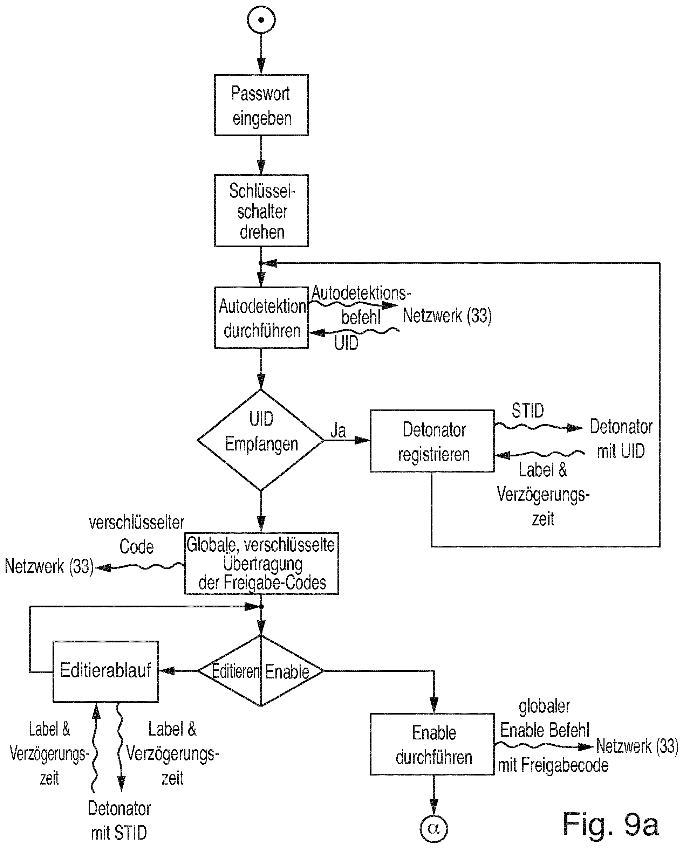

Hat sich ein Detonator 29 mit der höchsten Priorität durchgesetzt und sich somit zur Steuereinheit 31 zurückgemeldet, sendet die Steuereinheit 31 vorteilhafterweise eine Registrierungsnachricht an den Detonator 29. Die Registrierungsnachricht enthält vorzugsweise eine kurze, temporäre Identifikationsnummer STID (Short Temporary Identification Number), über welche der Detonator 29 für alle nachfolgende Kommunikation ansprechbar ist. Als Antwort auf die Registrierungsnachricht überträgt der Detonator 29 vorteilhafterweise seine gespeicherte Verzögerungszeit, seine Feldidentifikationsnummer FID und vorzugsweise weitere Daten, wie z.B. Selbstteststatus, an die Steuereinheit 31. Dieser Vorgang ist schematisch in Figur 9a dargestellt.

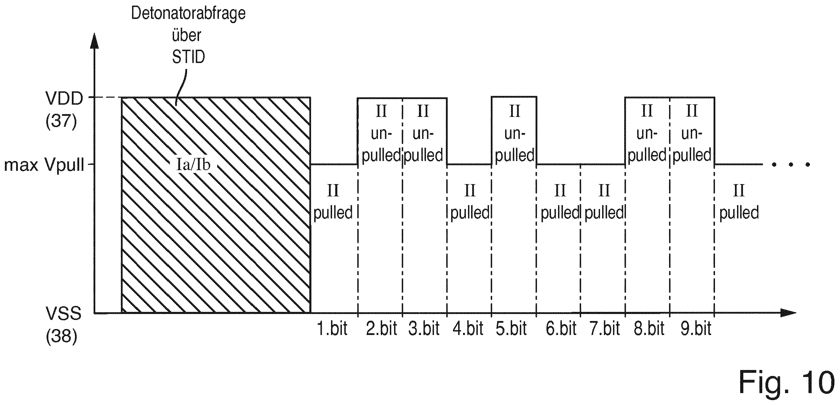

Nach der erfolgreichen Identifizierung eines Detonators 29 bei der Mastereinheit 31, kann die Mastereinheit 31 diesen Detonator 29 direkt ansprechen. Dies kann beispielsweise über die UID erfolgen (vgl. Figur 10). Es ist denkbar, dass der Master 31 den Detonator 29 über die übergebene STID anspricht. Diese STID ist in dem Detonatornetzwerk 33 einzigartig und kann kürzer sein als die UID.

Zur gesicherten Datenübertragung auf dem Bussystem 30 ist es vorteilhaft, eine Fehlererkennung (Error Detection) und/oder Fehlerkorrektur (Error Correction) durchzuführen. Zur Fehlerkorrektur kann beispielsweise ein linearer fehlerkorrigierender Blockcode, insbesondere ein Hamming-Code, verwendet werden. Durch ein solches Fehlerkorrekturverfahren werden die Bitfolgen verändert. Damit kann sich auch die Reihenfolge der übertragenen UID ändern, da die UID nicht mehr in einer Reihenfolge gemäß der Priorität ihrer ursprünglichen Bitfolge, sondern gemäß der Priorität der aus dem Fehlerkorrekturverfahren entstandenen Bitfolge übertragen werden. Die mittels des Fehlerkorrekturverfahrens erzeugte Bitfolge ist eindeutig. D.h. jedem Detonator 29 wird mittels des Fehlerkorrekturverfahrens eine eindeutige Bitfolge zugeordnet. Diese Bitfolge ist möglicherweise länger als die Bitfolge der UID. Vorteilhafterweise ist die Bitfolge, welche mittels des Fehlerkorrekturverfahrens erzeugt wurde, redundant. Es besteht also keine Kollisionsgefahr und die bitweise Arbitrierung funktioniert weiterhin, da die Reihenfolge der Erkennung der Detonatoren 29 keine Rolle spielt.

### Ladestrombegrenzung über Pulsweiten-Modulation

Die elektronische Einheit 1; 21 eines Detonators 29 umfasst vorzugsweise mehrere Kondensatoren bzw. Kondensatorbänke (eine Verschaltung mehrerer Kondensatoren zu einer Gesamtkapazität). Insbesondere handelt es sich dabei um den Zündkondensator 7 und um den Logikkondensator 5. Der Logikkondensator 5 dient vorzugsweise zum Speichern von elektrischer Energie zur autarken Stromversorgung des Mikrocontrollers 3 der elektrischen Einheit 1; 21 des Detonators 29 während der Zündsequenz. Vorzugsweise wird die elektrische Einheit 1; 21 des Kondensators 5 auch während der Rücksprechphase (während der Kommunikation über die Busverbindung mit der Steuereinheit 31) über den Logickondensator 5 versorgt. Der Zündkondensator 7 dient zum Speichern von elektrischer Energie zum Zünden. Es ist denkbar, dass während einer Zündsequenz auch die elektrische Einheit 1; 21, insbesondere der Mikrokontroller 3 und/oder die Logik des Detonators 29, aus dem Zündkondensator 7 versorgt wird.

Diese Kondensatoren 5, 7 können über die Busverbindung des Detonators 29 zur Steuereinheit 31, also beispielsweise über die Busleitungen des Bussystems 30 geladen werden. Sind mehrere Detonatoren 29 über ein solches Bussystem 30 zu einem Detonatornetzwerk 33 verbunden, können bei zeitgleichem Laden von mehreren Kondensatoren hohe Ströme über die Busleitung fließen. Ein Überschreiten des zulässigen Stroms für eine Busleitung muss vermieden werden. Vorteilhafterweise kann eine Strombegrenzung über eine Pulsweiten-modulation erreicht werden. Der Ladestrom ist somit ein PWM-gedrosselter Strom.

Die Logikkondensatoren 5 der Detonatoren 29 werden vorzugsweise beim Anschließen der Detonatoren 29 an eine Steuereinheit 31 über das Bussystem 30 geladen. Wenn alle Logickondensatoren 5 gleichzeitig geladen werden, können prinzipiell hohe Ströme auftreten. Durch das gepulste Laden können die fließenden Effektivströme beliebig reduziert werden, um die Spezifikationen der Busleitungen einzuhalten.

Die Zündkondensatoren 7 der Detonatoren 29 werden erst geladen, wenn ein sogenannter Freigabebefehl (Enable-Befehl) erfolgt ist. Dieser Freigabebefehl wird vorzugsweise durch einen Bediener über eine Benutzerschnittstelle in die Steuereinheit 31 eingegeben. Wenn mehrere Zündkondensatoren 7 gleichzeitig geladen werden, können prinzipiell hohe Ströme auftreten. Durch das gepulste Laden können die fließenden Effektivströme beliebig reduziert werden, um die Spezifikationen der Busleitungen einzuhalten.

### Verschlüsselung von Befehlen

Um unautorisiertes Verwenden der Detonatoren 29 zu verhindern, können diese vorzugsweise nur mit dem Original Equipment, d.h. mit der zugehörigen Steuereinheit 31 ausgelöst werden. Mit der Steuereinheit 31 werden vorteilhafterweise Freigabecodepaare erzeugt, insbesondere bestehend aus einem Prüfcode und einem Freigabecode. Der Prüfcode eines Freigabecodepaar wird über das Bussystem 30 an die Detonatoren 29 übertragen. Vorteilhafterweise kann jeder Detonator 29 aus dem empfangenen Prüfcode den entsprechenden Freigabecode ableiten. Ein Freigabebefehl oder ein Zündbefehl kann nur mit dem passenden, zugehörigen Freigabecode wirksam übertragen werden. Ohne den jeweiligen Freigabecode kann ein Detonator 29 nicht freigegeben bzw. nicht ausgelöst werden. Ein Prüfcode wird vorzugsweise nur ein einziges Mal verwendet. Vorteilhafterweise wird jedes Mal beim Anschließen der Detonatoren 29 an die Steuereinheit 31 oder beim Neuaufbau der Busverbindung zwischen den Detonatoren 29 und der Steuereinheit 31 ein neuer Prüfcode generiert und an alle Detonatoren 29 verteilt. Somit können diese Befehle nicht einfach kopiert werden und die Detonatoren 29 können nicht ohne die zugehörige Steuereinheit 31 ausgelöst werden. Die Steuereinheit 31 selbst ist vorzugsweise mit einem Passwort geschützt. Dieses Passwort muss vor Verwendung der Steuereinheit 31 eingegeben werden. Ohne die erfolgreiche Eingabe des Passworts können über die Steuereinheit 31 keine Freigabe- und Zündbefehle eingegeben werden. Die Übertragung der Prüfcodes und der Freigabecodes geschieht vorzugsweise verschlüsselt. Die notwendigen Schlüssel zur Verschlüsselung sind vorzugsweise im Steuergerät 31 und/oder in den Detonatoren 29 gespeichert. Die Schlüssel können insbesondere kundenspezifisch sein. Es ist denkbar, dass aus einem Prüfcode mehrere Freigabecodes ableitbar sind.

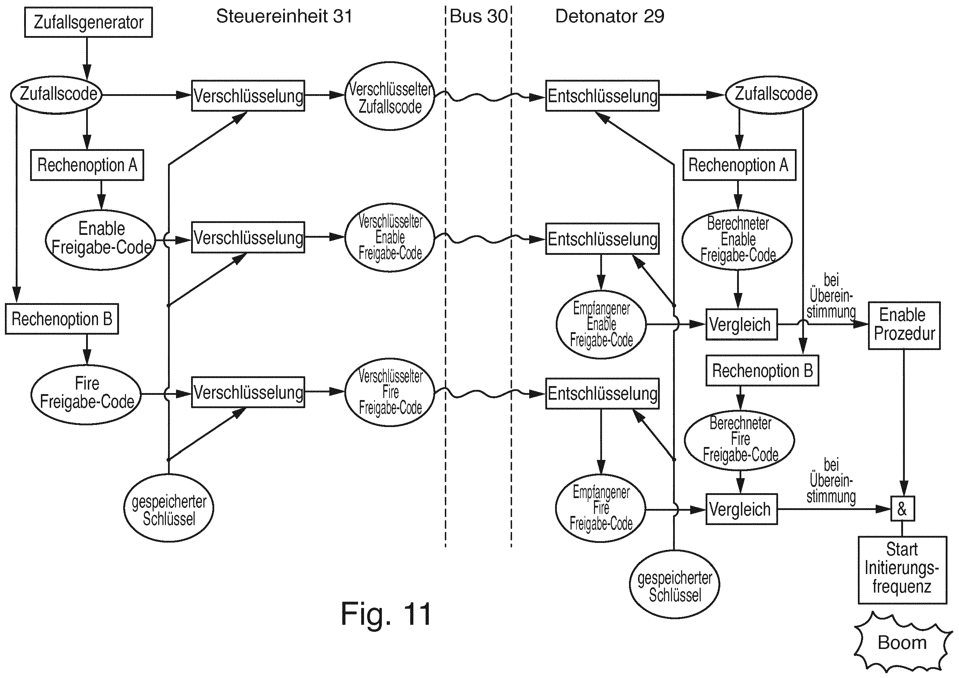

Figur 11 stellt den Ablauf vom Erzeugen eines Schlüsselpaars mittels eines Zufallscodegenerator bis zum Auslösen der Detonatoren 29 dar. Der Enable-Freigabe Code überträgt den Freigabebefehl mit dem das Laden der Zündkondensatoren 7 gestartet wird. Der Fire-Freigabe Code übermittelt den Zündbefehl zum Auslösen der Detonatoren 29.

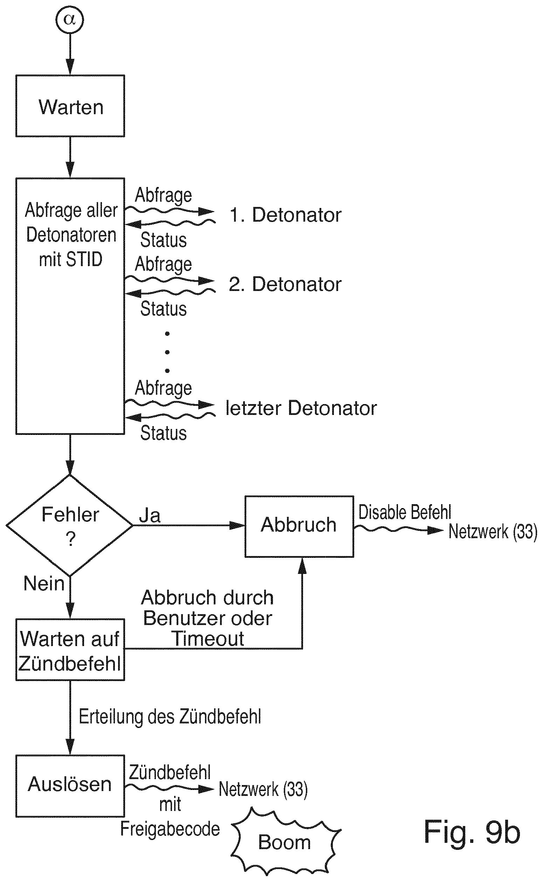

Die Figuren 9a und 9b zeigen ein Ablaufdiagramm einer Sprengung mit einer Steuereinheit 31 und einem Netzwerk 33 von Detonatoren 29. Die Steuereinheit 31 wird durch Eingabe eines Passworts freigeschaltet. Vorzugsweise ist die Steuereinheit 31 auch noch über einen Schlüsselschalter gesichert. Zur Freigabe der Steuereinheit 31 muss dann auch noch der Schlüsselschalter betätigt werden.

Mit dem vorstehend beschriebenen Verfahren zur Identifikation werden im Netzwerk 33 angeschlossenen Detonatoren 29 detektiert, identifiziert und registriert. Anschließend wird das vorstehend beschriebene Verfahren zur Verschlüsselung der Freigabe- und Zündbefehle durchgeführt. Nach dem Freigabebefehl, über den ein Laden der Zündkondensatoren 7 initiiert wird, wird über die Mastereinheit 31 der Status von jedem Detonator 29 abgefragt. Der jeweilige Detonator 29 meldet entweder, dass er in einem zündbereiten Zustand ist, d.h. unter anderem, dass der Zündkondensator 7 ausreichend geladen ist, oder er schickt eine Fehlermeldung. Haben alle Detonatoren 29 erfolgreich ihre Zündbereitschaft zurückgemeldet, kann der Zündbefehl erteilt werden. Der Zündbefehl initiiert das Auslösen der Detonatoren 29.

## Patentansprüche

1. Verfahren zum Aufbau eines Netzwerks (33) umfassend mehrere elektronische Detonatoren (29) und eine Steuereinheit (31), die über ein Bussystem (30) miteinander in Verbindung stehen, wobei jeder der Detonatoren (29) ein mit dem Bussystem (30) in Verbindung stehendes Kommunikationsmodul (22) für eine Kommunikation zwischen dem Detonator (29) und der Steuereinheit (31) über das Bussystem (30) aufweist, und wobei als Teil des Aufbaus des Netzwerks (33) noch nicht identifizierte Detonatoren (29) durch die Steuereinheit (31) identifiziert werden, **dadurch gekennzeichnet, dass** jedem der Detonatoren (29) eine eindeutige Kennung (UID) zugeordnet ist und dass im Rahmen der Identifizierung der Detonatoren (29) in dem Netzwerk (33) eine bitweise bidirektionale Kommunikation zwischen der Steuereinheit (31) und den Detonatoren (29) ausgeführt wird, wobei
- eine erste Schleife entsprechend der Anzahl der nicht identifizierten Detonatoren (29) in dem Netzwerk (33) iterativ durchlaufen wird, wobei nach jedem Durchlauf der ersten Schleife ein weiterer Detonator (29) identifiziert ist, und
- in jeder Iteration der ersten Schleife eine zweite Schleife entsprechend der Anzahl der Bits der eindeutigen Kennung (UID) der Detonatoren (29) iterativ durchlaufen wird, wobei bei jeder Iteration der zweiten Schleife die noch nicht identifizierte Detonatoren (29) ein Bit ihrer eindeutigen Kennung (UID) übertragen und an den Bus anlegen und nach jeder Iteration der zweiten Schleife der Steuereinheit (31) ein weiteres Bit der eindeutigen Kennung (UID) eines Detonators (29) bekannt ist, wobei Zugriffsprobleme auf das Bussystem (30) durch eine bitweise Arbitrierung gelöst werden, die von jedem Detonator (29) durch eine Überwachung des an dem Bussystem (30) anliegenden Levels Bit für Bit vorgenommen wird.

2. Verfahren nach Anspruch 1, **dadurch gekennzeichnet, dass** jede Iteration der ersten Schleife durch einen globalen Autodetektionsbefehl ausgelöst wird, der von der Steuereinheit (31) über das Bussystem (30) an die Detonatoren (29) des Netzwerks (33) ausgesandt wird.

3. Verfahren nach Anspruch 2, **dadurch gekennzeichnet, dass** der Autodetektionsbefehl mehrere Bit umfasst.

4. Verfahren nach einem der Ansprüche 2 oder 3, **dadurch gekennzeichnet, dass** im Rahmen der Iteration der ersten Schleife
- die Detonatoren (29) des Netzwerks (33) den Autodetektionsbefehl empfangen,
- alle noch nicht identifizierten Detonatoren (29) des Netzwerks (33) als Antwort auf den Autodetektionsbefehl ein erstes Bit ihrer eindeutigen Kennung (UID) an das Bussystem (30) anlegen,
- die Steuereinheit (31) die angelegten ersten Bits empfängt,
- die Steuereinheit (31) ein empfangenes erstes Bit auswählt und als Wiederholungsbit an das Bussystem (30) anlegt,
- die Detonatoren (29) das Wiederholungsbit empfangen,
- die noch nicht identifizierten Detonatoren (29) das empfangene Wiederholungsbit mit dem von ihnen zuvor angelegten ersten Bit ihrer eindeutigen Kennung (UID) vergleichen, und
- die noch nicht identifizierten Detonatoren (29), deren zuvor angelegtes erstes Bit ihrer eindeutigen Kennung (UID) mit dem empfangenen Wiederholungsbit übereinstimmt, ein weiteres Bit ihrer eindeutigen Kennung (UID) an das Bussystem (30) anlegen,
- die Steuereinheit (31) die angelegten weiteren Bits empfängt, und
- falls durch das Aussenden der weiteren Bits die Anzahl an Bits der eindeutigen Kennungen (UID) der Detonatoren (29) erreicht ist, ein Detonator (29) des Netzwerks identifiziert ist und die zweite Schleife und die laufende Iteration der ersten Schleife beendet wird.

5. Verfahren nach Anspruch 4, **dadurch gekennzeichnet, dass** falls durch das Anlegen der weiteren Bits die Anzahl an Bits der eindeutigen Kennungen (UID) der Detonatoren (29) noch nicht erreicht ist, im Rahmen der ersten Schleife des weiteren
- die Steuereinheit (31) ein empfangenes weiteres Bit auswählt und als Wiederholungsbit an das Bussystem (30) anlegt,
- die Detonatoren (29) das Wiederholungsbit empfangen,
- die noch nicht identifizierten Detonatoren (29) das empfangene Wiederholungsbit mit dem von ihnen zuvor angelegten weiteren Bit ihrer eindeutigen Kennung (UID) vergleichen,
- die noch nicht identifizierten Detonatoren (29), deren zuvor angelegtes weiteres Bit ihrer eindeutigen Kennung (UID) mit dem empfangenen Wiederholungsbit übereinstimmt, ein weiteres Bit ihrer eindeutigen Kennung (UID) an das Bussystem (30) anlegen,
- die Steuereinheit (31) die angelegten weiteren Bits empfängt, und
- die obigen Schritte der zweiten Schleife solange wiederholt werden, bis durch das Aussenden der weiteren Bits die Anzahl an Bits der eindeutigen Kennungen (UID) der Detonatoren (29) erreicht ist und ein weiterer Detonator (29) des Netzwerks (33) identifiziert ist und die laufende Iteration der ersten Schleife beendet wird.

6. Verfahren nach Anspruch 4 oder 5, **dadurch gekennzeichnet, dass** nach der Beendigung der Iteration der ersten Schleife, falls noch nicht identifizierte Detonatoren (29) im Netzwerk (33) vorhanden sind, die erste Schleife nochmals durchlaufen wird und die Schritte des Anspruchs 5 oder der Ansprüche 5 und 6 nochmals ausgeführt werden, so dass ein weiterer Detonator (29) des Netzwerks (33) identifiziert wird.

7. Verfahren nach Anspruch 6, **dadurch gekennzeichnet, dass** das Verfahren beendet wird, wenn die Anzahl der identifizierten Detonatoren (29) der Anzahl an zu Beginn des Verfahrens noch nicht identifizierten Detonatoren (29) in dem Netzwerk (33) entspricht und/oder wenn keiner der Detonatoren (29) des Netzwerks (33) auf einen Autodetektionsbefehl mehr antwortet.

8. Verfahren nach einem der Ansprüche 4 bis 7, **dadurch gekennzeichnet, dass** die Steuereinheit aus den empfangenen Bits, falls die empfangenen Bits ein dominantes Bit umfassen, ein dominantes Bit auswählt und als Wiederholungsbit am Bussystem (30) anlegt, und falls die empfangenen Bits kein dominantes Bit umfassen, ein rezessives Bit auswählt und als Wiederholungsbit anlegt.

9. Verfahren nach Anspruch 8, **dadurch gekennzeichnet, dass** das dominante Bit einem dominanten Pegel, vorzugsweise einem Low-Pegel (logisch 0), des Bussystems (30) entspricht, der einem niedrigeren Spannungspegel auf dem Bussystem (30) zugeordnet ist.

10. Verfahren nach Anspruch 4 oder 5, **dadurch gekennzeichnet, dass** die noch nicht identifizierten Detonatoren (29), deren zuvor angelegtes Bit ihrer eindeutigen Kennung (UID) mit dem empfangenen Wiederholungsbit nicht übereinstimmt, für die Dauer der laufenden Iteration der ersten Schleife mit der bitweisen Übertragung ihrer eindeutigen Kennung (UID) aufhören und erst bei der nächsten Iteration der ersten Schleife nach einem nochmaligen Empfang eines Autodetektionsbefehls der Steuereinheit (31) wieder die bitweise Übertragung ihrer eindeutigen Kennung (UID) aufnehmen.

11. Verfahren nach einem der Ansprüche 1 bis 10, **dadurch gekennzeichnet, dass** die Steuereinheit (31) im Anschluss an eine erfolgte Identifizierung eines Detonators (29) eine Registrierungsnachricht, vorzugsweise mit einer temporären Identifikationsnummer (STID), über die der Detonator (29) für die nachfolgende Kommunikation ansprechbar ist, an den identifizierten Detonator (29) sendet.

12. Verfahren nach Anspruch 11, **dadurch gekennzeichnet, dass** der Detonator (29) als Antwort auf die Registrierungsnachricht seine gespeicherte Verzögerungszeit und vorzugsweise weitere Daten, wie z.B. Selbstteststatus, an die Steuereinheit (31) überträgt.

13. Verfahren nach einem der Ansprüche 1 bis 12, **dadurch gekennzeichnet, dass** jeder der Detonatoren (29) eine Logik (3) und eine zündtechnische Schaltung (4, 5, 7, 8) aufweist, wobei die Logik (3) und die zündtechnische Schaltung (4, 5, 7, 8) der Detonatoren (29) über einen jeweils in den Detonator (29) integrierten Schalter (100) zumindest für die Dauer einer Übertragung eines Bits durch die Detonatoren (29) von dem Bussystem (30) getrennt wird.

14. Verfahren nach Anspruch 13, **dadurch gekennzeichnet, dass** eine Stromversorgung der Logik (3) der Detonatoren (29) während der Trennung von dem Bussystem (30) aus in den Detonatoren (29) integrierten Logikkondensatoren (5) erfolgt.

15. Verfahren nach Anspruch 14, **dadurch gekennzeichnet, dass** die Logikkondensatoren (5) der Detonatoren (29) des Netzwerks (33) bei nicht vorhandener Trennung von dem Bussystem (30) über das Bussystem (30) geladen werden.

16. Verfahren nach einem der Ansprüche 1 bis 15, **dadurch gekennzeichnet, dass** durch die noch nicht identifizierten Detonatoren (29) ihre eindeutigen Kennung (UID) statt in der Bitfolge der eindeutigen Kennung (UID) in einer fehlerkorrigierten Bitfolge übertragen und von der Steuereinheit (31) empfangen wird, wobei die Steuereinheit (31) aus der empfangenen fehlerkorrigierten Bitfolge die eindeutige Kennung (UID) der Detonatoren (29) ableiten kann.

17. Verfahren nach Anspruch 16, **dadurch gekennzeichnet, dass** die Bitfolge mithilfe eines Hammingcodes fehlerkorrigiert wird.

## Claims

1. Method for setting up a network (33), comprising a plurality of electronic detonators (29) and a control unit (31) which are interconnected via a bus system (30), each of the detonators (29) having a communication module (22) which is connected to the bus system (30) for communication between the detonator (29) and the control unit (31) via the bus system (30), and, as part of the setting up of the network (33), as yet unidentified detonators (29) being identified by the control unit (31), **characterized in that** a unique identifier (UID) is assigned to each of the detonators (29) and **in that**, in the context of the identification of the detonators (29) in the network (33), a bitwise bidirectional communication between the control unit (31) and the detonators (29) is carried out,
- a first loop corresponding to the number of the unidentified detonators (29) in the network (33) being iteratively run through, a further detonator (29) being identified after each run through of the first loop, and
- a second loop corresponding to the number of the bits of the unique identifier (UID) of the detonators (29) being iteratively run through in each iteration of the first loop, the as yet unidentified detonators (29) transmitting one bit of their unique identifier (UID) and applying said bit to the bus in each iteration of the second loop, and a further bit of the unique identifier (UID) of a detonator (29) being known after each iteration of the second loop of the control unit (31), access problems to the bus system (30) being solved by bitwise arbitration which is carried out by each detonator (29) by monitoring the level applied to the bus system (30) bit by bit.

2. Method according to claim 1, **characterized in that** each iteration of the first loop is triggered by a global auto-detection command which is sent from the control unit (31) via the bus system (30) to the detonators (29) of the network (33).

3. Method according to claim 2, **characterized in that** the auto-detection command comprises a plurality of bits.

4. Method according to claim 2 or claim 3, **characterized in that**, in the context of the iteration of the first loop,
- the detonators (29) of the network (33) receive the auto-detection command,
- all the as yet unidentified detonators (29) of the network (33) apply a first bit of their unique identifier (UID) to the bus system (30) in response to the auto-detection command,
- the control unit (31) receives the applied first bits,
- the control unit (31) selects a received first bit and applies it to the bus system (30) as a repeat bit,
- the detonators (29) receive the repeat bit,
- the as yet unidentified detonators (29) compare the received repeat bit with the bit of their unique identifier (UID) that they had previously applied, and
- the as yet unidentified detonators (29), of which the previously applied first bit of their unique identifier (UID) matches the received repeat bit, apply a further bit of their unique identifier (UID) to the bus system (30),
- the control unit (31) receives the applied further bits, and
- if the number of bits of the unique identifiers (UID) of the detonators (29) is reached by sending the further bits, a detonator (29) of the network is identified and the second loop and the continuous iteration of the first loop are completed.

5. Method according to claim 4, **characterized in that** if the number of bits of the unique identifiers (UID) of the detonators (29) has not yet been reached by applying the further bits, furthermore within the first loop
- the control unit (31) selects a further received bit and applies it to the bus system (30) as a repeat bit,
- the detonators (29) receive the repeat bit,
- the as yet unidentified detonators (29) compare the received repeat bit with the further bit of their unique identifier (UID) that they previously applied,
- the as yet unidentified detonators (29), of which the previously applied further bit of their unique identifier (UID) matches the received repeat bit, apply a further bit of their unique identifier (UID) to the bus system (30),
- the control unit (31) receives the applied further bits, and
- the above steps of the second loop are repeated until the number of bits of the unique identifiers (UID) of the detonators (29) is reached by sending the further bit and a further detonator (29) of the network (33) is identified and the continuous iteration of the first loop is completed.

6. Method according to claim 4 or claim 5, **characterized in that**, after the iteration of the first loop is completed, if there are as yet unidentified detonators (29) in the network (33), the first loop is run through again and the steps of claim 5 or claims 5 and 6 are carried out again such that a further detonator (29) of the network (33) is identified.

7. Method according to claim 6, **characterized in that** the method is completed when the number of identified detonators (29) corresponds to the number of detonators (29) in the network (33) as yet unidentified at the beginning of the method and/or if none of the detonators (29) of the network (33) respond to an auto-detection command.

8. Method according to any of claims 4 to 7, **characterized in that** if the received bits comprise a dominant bit, the control unit selects a dominant bit from the received bits and applies it as a repeat bit to the bus system (30), and if the received bits do not comprise a dominant bit, the control unit selects a recessive bit and applies it as a repeat bit.

9. Method according to claim 8, **characterized in that** the dominant bit corresponds to a dominant level, preferably a low level (logic 0), of the bus system (30) that is assigned to a lower voltage level on the bus system (30).

10. Method according to claim 4 or claim 5, **characterized in that** the as yet unidentified detonators (29), of which the previously applied bit of their unique identifier (UID) does not match the received repeat bit, stop the bitwise transmission of their unique identifier (UID) for the duration of the continuous iteration of the first loop and only resume the bitwise transmission of their unique identifier (UID) at the next iteration of the first loop after an auto-detection command from the control unit (31) is received again.

11. Method according to any of claims 1 to 10, **characterized in that** following a successful identification of a detonator (29), the control unit (31) sends a registration message, preferably having a temporary identification number (STID), via which the detonator (29) can be addressed for the subsequent communication, to the identified detonator (29).

12. Method according to claim 11, **characterized in that** in response to the registration message, the detonator (29) transmits its stored delay time and preferably further data, e.g. self-testing status, to the control unit (31).

13. Method according to any of claims 1 to 12, **characterized in that** each of the detonators (29) has a logic (3) and an ignition circuit (4, 5, 7, 8), the logic (3) and the ignition circuit (4, 5, 7, 8) of the detonators (29) being separated from the bus system (30) via a switch (100) integrated in each case into the detonator (29) at least for the duration of a transmission of a bit by the detonators (29).

14. Method according to claim 13, **characterized in that** power is supplied to the logic (3) of the detonators (29) during the separation from the bus system (30) from logic capacitors (5) integrated in the detonators (29) .

15. Method according to claim 14, **characterized in that** the logic capacitors (5) of the detonators (29) of the network (33) are charged via the bus system (30) when there is no separation from the bus system (30).

16. Method according to any of claims 1 to 15, **characterized in that** the as yet unidentified detonators (29) transmit their unique identifier (UID) in an error-corrected bit sequence instead of in the bit sequence of the unique identifier (UID) and said error-corrected bit sequence is received by the control unit (31), it being possible for the control unit (31) to derive the unique identifier (UID) of the detonators (29) from the received error-corrected bit sequence.

17. Method according to claim 16, **characterized in that** the bit sequence is error-corrected using a Hamming code.

## Revendications

1. Méthode de constitution d'un réseau (33) comprenant plusieurs détonateurs électroniques (29) et une unité de commande (31) reliés les uns aux autres par l'intermédiaire d'un système de bus (30), dans laquelle chacun des détonateurs (29) présente un module de communication (22) relié au système de bus (30) en vue d'une communication entre le détonateur (29) et l'unité de commande (31) par l'intermédiaire du système de bus (30), et dans laquelle des détonateurs (29) non encore identifiés sont identifiés grâce à l'unité de commande (31) comme faisant partie de la constitution du réseau (33), **caractérisée en ce qu'**un identifiant unique (UID) est associé à chacun des détonateurs (29) et **en ce qu'**une communication bidirectionnelle de type binaire entre l'unité de commande (31) et les détonateurs (29) est mise en œuvre dans le cadre de l'identification des détonateurs (29) au sein du réseau (33), dans laquelle
- une première boucle correspondant au nombre de détonateurs (29) non identifiés au sein du réseau (33) est parcourue de manière itérative, dans laquelle un détonateur (29) supplémentaire est identifié après chaque parcours de la première boucle, et
- une seconde boucle correspondant au nombre de bits de l'identifiant unique (UID) des détonateurs (29) est parcourue de manière itérative lors de chaque itération de la première boucle, dans laquelle les détonateurs (29) non encore identifiés transmettent un bit de leur identifiant unique (UID) lors de chaque itération de la seconde boucle et l'appliquent au bus et un bit supplémentaire de l'identifiant unique (UID) d'un détonateur (29) est connu après chaque itération de la seconde boucle de l'unité de commande (31), dans laquelle des problèmes d'accès au système de bus (30) sont résolus grâce à un arbitrage de type binaire qui est réalisé bit par bit par chaque détonateur (29) grâce à une surveillance du niveau attaché au système de bus (30).

2. Méthode selon la revendication 1, **caractérisée en ce que** chaque itération de la première boucle est déclenchée grâce à une commande d'auto-détection globale qui est émise vers les détonateurs (29) du réseau (33) à partir de l'unité de commande (31) par l'intermédiaire du système de bus (30)

3. Méthode selon la revendication 2, **caractérisée en ce que** la commande d'auto-détection comprend plusieurs bits.

4. Méthode selon la revendication 2 ou 3, **caractérisée en ce que** dans le cadre de l'itération de la première boucle
- les détonateurs (29) du réseau (33) reçoivent la commande d'auto-détection,
- tous les détonateurs (29) non encore identifiés du réseau (33) appliquent un premier bit de leur identifiant unique (UID) au système de bus (30) en réponse à la commande d'auto-détection,
- l'unité de commande (31) reçoit les premiers bits appliqués,
- l'unité de commande (31) sélectionne un premier bit reçu et l'applique au système de bus (30) sous forme de bit de répétition,
- les détonateurs (29) reçoivent le bit de répétition,
- les détonateurs (29) non encore identifiés comparent le bit de répétition reçu avec le premier bit de leur identifiant unique (UID) qu'ils ont appliqué précédemment, et
- les détonateurs (29) non encore identifiés dont le premier bit précédemment appliqué de leur identifiant unique (UID) correspond au bit de répétition reçu appliquent un bit supplémentaire de leur identifiant unique (UID) au système de bus (30),
- l'unité de commande (31) reçoit les bits supplémentaires appliqués, et
- si le nombre de bits des identifiants uniques (UID) des détonateurs (29) est atteint grâce à l'émission des bits supplémentaires, un détonateur (29) du réseau est identifié et la seconde boucle et l'itération en cours de la première boucle sont arrêtées.

5. Méthode selon la revendication 4, **caractérisée en ce que** si dans le cadre de la première boucle, le nombre de bits des identifiants uniques (UID) des détonateurs (29) n'est pas encore atteint grâce à l'application des bits supplémentaires, alors
- l'unité de commande (31) sélectionne un bit supplémentaire reçu et l'applique au système de bus (30) sous forme de bit de répétition,
- les détonateurs (29) reçoivent le bit de répétition,
- les détonateurs (29) non encore identifiés comparent le bit de répétition reçu avec le bit supplémentaire de leur identifiant unique (UID) qu'ils ont appliqué précédemment,
- les détonateurs (29) non encore identifiés dont le bit supplémentaire précédemment appliqué de leur identifiant unique (UID) correspond au bit de répétition reçu appliquent un bit supplémentaire de leur identifiant unique (UID) au système de bus (30),
- l'unité de commande (31) reçoit les bits supplémentaires appliqués, et
- les étapes ci-dessus de la seconde boucle sont répétées jusqu'à ce que le nombre de bits des identifiants uniques (UID) des détonateurs (29) soit atteint grâce à l'émission des bits supplémentaires et qu'un détonateur (29) supplémentaire du réseau (33) soit identifié et que l'itération en cours de la première boucle soit arrêtée.

6. Méthode selon la revendication 4 ou 5, **caractérisée en ce que** si des détonateurs (29) non encore identifiés sont présents au sein du réseau (33) après l'arrêt de l'itération de la première boucle, la première boucle est parcourue à nouveau et les étapes de la revendication 5 ou des revendications 5 et 6 sont à nouveau mises en œuvre de manière à ce qu'un détonateur (29) supplémentaire du réseau (33) soit identifié.

7. Méthode selon la revendication 6, **caractérisée en ce que** la méthode est arrêté lorsque le nombre de détonateurs (29) identifiés correspond au nombre de détonateurs (29) non encore identifiés au début de la méthode au sein du réseau (33) et/ou lorsqu'aucun des détonateurs (29) du réseau (33) ne répond plus à une commande d'auto-détection.

8. Méthode selon l'une quelconque des revendications 4 à 7, **caractérisée en ce que** si les bits reçus comprennent un bit dominant, l'unité de commande sélectionne un bit dominant parmi les bits reçus et l'applique au système de bus (30) sous forme de bit de répétition, et si les bits reçus ne comprennent aucun bit dominant, l'unité de commande sélectionne un bit récessif et l'applique sous forme de bit de répétition.

9. Méthode selon la revendication 8, **caractérisée en ce que** le bit dominant correspond à un niveau dominant du système de bus (30), de manière préférée un niveau bas (0 logique), associé à un niveau de tension inférieur sur le système de bus (30).

10. Méthode selon la revendication 4 ou 5, **caractérisée en ce que** les détonateurs (29) non encore identifiés dont le bit précédemment appliqué de leur identifiant unique (UID) ne correspond pas au bit de répétition reçu, cessent la transmission bit par bit de leur identifiant unique (UID) pendant la durée de l'itération en cours de la première boucle et ne reprennent la transmission bit par bit de leur identifiant unique (UID) qu'à l'itération suivante de la première boucle après une nouvelle réception d'une commande d'auto-détection de l'unité de commande (31).

11. Méthode selon l'une quelconque des revendications 1 à 10, **caractérisée en ce que** l'unité de commande (31), après une identification réussie d'un détonateur (29), envoie au détonateur identifié (29) un message d'enregistrement, de manière préférée accompagné d'un numéro d'identification temporaire (STID) par l'intermédiaire duquel le détonateur (29) peut être adressé en vue de la communication suivante.

12. Méthode selon la revendication 11, **caractérisée en ce qu'**en réponse au message d'enregistrement, le détonateur (29) transmet à l'unité de commande (31) son temps de retard mémorisé et de manière préférée des données supplémentaires, par exemple un statut d'autotest.

13. Méthode selon l'une quelconque des revendications 1 à 12, **caractérisée en ce que** chacun des détonateurs (29) présente un circuit logique (3) et un circuit d'allumage (4, 5, 7, 8), dans laquelle le circuit logique (3) et le circuit d'allumage (4, 5, 7, 8) des détonateurs (29) est séparé du système de bus (30) par l'intermédiaire d'un interrupteur (100) respectivement intégré dans le détonateur (29) au moins pendant la durée d'une transmission d'un bit au travers des détonateurs (29).

14. Méthode selon la revendication 13, **caractérisée en ce qu'**une alimentation électrique du circuit logique (3) des détonateurs (29) pendant la séparation du système de bus (30) est assurée à partir de condensateurs de circuit logique (5) intégrés dans les détonateurs (29).

15. Méthode selon la revendication 14, **caractérisée en ce que** les condensateurs de circuit logique (5) des détonateurs (29) du réseau (33) sont chargés par l'intermédiaire du système de bus (30) lorsqu'il n'y a pas de séparation du système de bus (30).

16. Méthode selon l'une quelconque des revendications 1 à 15, **caractérisée en ce que** l'identifiant unique (UID) des détonateurs (29) non encore identifiés est transmis au travers de ceux-ci au sein d'une séquence de bits corrigée de ses erreurs au lieu de l'être au sein de la séquence de bits de l'identifiant unique (UID) et est reçu par l'unité de commande (31), dans laquelle l'unité de commande (31) peut déduire l'identifiant unique (UID) des détonateurs (29) à partir de la séquence de bits corrigée de ses erreurs reçue.

17. Méthode selon la revendication 16, **caractérisée en ce que** la séquence de bits est corrigée de ses erreurs en utilisant un code de Hamming.
